# EUROPEAN PATENT APPLICATION

(11) **EP 4 249 433 A1**
(43) Date of publication of application: **27.09.2023**
(21) Application number: 21894275.3
(22) Date of filing: 05.08.2021
(51) Int. Cl.: C01B 33/16, C01B 33/18, F16L 59/02

(54) **AEROGEL COMPOSITE MOLDED BODY**

(30) Priority: 20.11.2020 JP 2020193647
(71) Applicant: Krosakiharima Corporation, Kitakyushu-shi, Fukuoka 806-8586 (JP); National Institute for Materials Science, Tsukuba-shi, Ibaraki 305-0047 (JP)
(72) Inventor: MATSUZAKI, Kazuhiro, Kitakyushu-shi, Fukuoka 806-8586 (JP); SASAYAMA, Hironobu, Kitakyushu-shi, Fukuoka 806-8586 (JP); MATSUO, Yukihisa, Kitakyushu-shi, Fukuoka 806-8586 (JP); YAMASHITA, Shogo, Kitakyushu-shi, Fukuoka 806-8586 (JP); WU, Rudder, Tsukuba-shi, Ibaraki 305-0047 (JP); LEE, Kuan-I, Tsukuba-shi, Ibaraki 305-0047 (JP)
(74) Representative: Vossius & Partner Patentanwälte Rechtsanwälte mbB
(86) International application number: PCT/JP2021/029074
(87) International publication number: WO 2022/107400

(57) **Abstract**

The present invention relates to an aerogel composite molded body capable of exhibiting a low thermal conductivity and reducing the occurrence of a defect in the molded body. Specifically, the present invention provides an aerogel composite molded body obtained by press-molding a raw material composition comprising an aerogel powder and an ultrafine silica powder excluding the aerogel powder, and a thermal insulator comprising the aerogel composite molded body. The aerogel powder has a median size of 1 µm to 45 µm, and the raw material composition contains the aerogel powder in an amount of 1 % by mass to 55 % by mass.

## Description

### TECHNICAL FIELD

The present Invention relates to an aerogel composite molded body.

### BACKGROUND ART

Heretofore, there has been known, as a thermal insulator, a microporous thermal insulator obtained by press-molding a raw material composition comprising an ultrafine silica powder (fumed silica) as a main raw material (see, e.g., the following Parent Document 1).

Such a microporous thermal insulator has a high thermal insulation property because of its low thermal conductivity. However, there is still a need for a material capable of realizing lower thermal conductivity to realize higher thermal insulation property.

### CITATION LIST

### [Patent Document]

Patent Document: JP-B 6431252

### SUMMARY OF INVENTION

### [Technical Problem]

With a focus on aerogels known as a material with very low thermal conductivity, the present inventors got an idea of adding an aerogel powder to a raw material composition to obtain a molded body such as a thermal insulator. However, it has been found that simply adding the aerogel powder to the raw material composition causes significant occurrence of a defect (crack) in the molded body.

A technical problem to be addressed by the present invention is to provide an aerogel composite molded body capable of exhibiting a low thermal conductivity and reducing the occurrence of a defect in the molded body.

### [Solution to Technical Problem]

As a result of repeated tests and studies regarding the constitution, etc., of a raw material composition for a molded body such as a thermal insulator, with a view to enabling the molded body to exhibit a low thermal conductivity and reduce the occurrence of a defect in the molded body, the present inventors have arrived at conceiving the present invention.

According to one aspect of the present invention, there is provided an aerogel composite molded body obtained by press-molding a raw material composition comprising an aerogel powder and an ultrafine silica powder excluding the aerogel powder, wherein: the aerogel powder has a median size of 1 µm to 45 µm; and the raw material composition contains the aerogel powder in an amount of 1 % by mass to 55 % by mass.

### [Effect of Invention]

The present invention can provide an aerogel composite molded body capable of exhibiting a low thermal conductivity and reducing the occurrence of a defect in the molded body.

### DESCRIPTION OF EMBODIMENTS

An aerogel composite molded body of the present invention is obtained by press-molding a raw material composition which comprises an aerogel powder, and an ultrafine silica powder excluding the aerogel powder (hereinafter referred to simply as "ultrafine silica powder"). By including the aerogel powder and the ultrafine silica powder in the raw material composition in this way, it becomes possible to realize low thermal conductivity, and reduce the occurrence of a defect in the molded body.

The aerogel powder to be used in the present invention has a median size (d50) of 1 µm to 45 µm. Such an aerogel powder can be obtained by subjecting an aerogel raw material (e.g., silica gel) to a heretofore known drying method such as supercritical drying or normal pressure drying to prepare an aerogel, and appropriately pulverizing the aerogel. That is, it can be obtained by pulverizing an aerogel prepared through a heretofore known drying method, such that the median size of the aerogel falls within the range of 1 µm to 45 µm. Examples of heretofore known aerogels include silica aerogel, alumina aerogel, zirconia aerogel, polymer aerogel, and carbon aerogel. In the present invention, it is possible to use one or more selected from the group consisting of a silica aerogel powder, an alumina aerogel powder, a zirconia aerogel powder, a polymer aerogel powder and a carbon aerogel powder, each obtained by pulverizing a corresponding one of the above aerogels. However, from a viewpoint of realizing lower thermal conductivity, it is preferable to use a silica aerogel powder.

If the median size of the aerogel powder is less than 1 µm, a fine pore structure is impaired, resulting in failing to sufficiently obtain a thermal conductivity-lowering effect. On the other hand, if the median size of the aerogel powder is greater than 45 µm, the amount of spring back after molding becomes excessively large, resulting in the occurrence of a large number of defects in the molded body.

Preferably, the median size of the aerogel powder is 15 µm to 25 µm. Further, the maximum particle size of the aerogel powder is preferably 600 µm or less.

In the present invention, the aerogel powder is contained in the raw material composition in an amount of 1 % by mass to 55 % by mass. If the content of the aerogel powder is less than 1 % by mass, it is impossible to realize a low thermal conductivity. On the other hand, if the content of the aerogel powder is greater than 55 % by mass, the amount of spring back after molding becomes excessively large, resulting in the occurrence of a large number of defects in the molded body.

The content of the aerogel powder in the raw material composition is preferably 2 % by mass to 30 % by mass, more preferably 4 % by mass to 15 % by mass.

Preferably, in the present invention, the aerogel powder comprises hollow particles. The hollow particles block fine continuous holes (pores) remaining in an aerogel to suppress thermal conduction via air molecules, so that the thermal conductivity is further lowered.

The thermal conductivity can be much further lowered by encapsulating a gas having a lower thermal conductivity than that of air (such as carbon dioxide) in the hollow particles.

The hollow particles are not particularly limited, but may be nano hollow particles, micro hollow particles, or a combination thereof. Preferably, the nano hollow particles are prepared such that each has an outer diameter of 30 nm to 360 nm, and a spherical shell thickness of 7.5 nm to 65 nm. This outer diameter is equivalent to about 1/2 to about 5 times of the mean free path of air at normal temperature and pressure. As just described, the nano hollow particles are prepared such that the size of each hollow portion thereof is at a similar level to the mean free path of air. Thus, when added to an aerogel, the nano hollow particles contribute largely to the thermal conductivity-lowering effect. Preferably, the micro hollow particles are prepared such that each has an outer diameter of 1 µm to 23 µm, and a spherical shell thickness of 0.35 µm to 3 µm. The outer diameter is greater than 15 times of the mean free path of air at normal temperature and pressure, so that it has the effect of enhancing a structural strength of the aerogel network, in addition to contribution to the thermal conductivity-lowering effect. Although fine continuous holes as mentioned above remain in the aerogel, the added hollow particles block these continuous holes to suppress thermal conduction via gas, such as convection, which would otherwise be caused by the continuous holes.

The nano hollow particles can be produced by, e.g., a soft template method. Specifically, the surface of a polyelectrolyte is modified in ethanol by ammonia and coated with silica (SiO₂), thereby producing particles each comprised of a core and spherical shell. These particles are subjected to cleaning or burning to remove a medium which has been contained in the core, thereby producing hollow particles.

For the production of micro hollow particles, for example, a double emulsion method is suitable.
From a multiphase dispersion system consisting of immiscible liquid such as a combination of an oil phase containing a surfactant and an aqueous phase consisting of a precursor and a surfactant, the oil phase is formed into a continuous phase by emulsification to produce an emulsion containing aqueous phase-centered droplets, and then an aqueous phase is added to the emulsion, so that this emulsion is changed such that it contains gel-centered droplets in an aqueous continuous phase. The resulting emulsion is subjected to cleaning/filtration, or burning, thereby producing micro hollow particles.

An aerogel powder comprising such hollow particles can be obtained in, e.g., the following manner.

Taking silica aerogel as an example, an aerogel comprising the hollow particles is produced mainly through the following two steps: a step of forming a wet gel by a sol-gel method; and a step of drying the wet gel. The wet gel consists of a nanostructured solid silica network and a liquid solvent, and is produced by subjecting silica precursor molecules to hydrolysis and condensation. This silica precursor is produced by mixing tetraethyl orthosilicate (TEOS) and methanol together. To this mixed liquid, the hollow particles and total 6.3 g of oxalic acid (0.01 M) are further added, and 1.5 g of ammonium hydroxide (NHaOH: 0.5 M) is finally added to form alcosol. This alcosol gelates when left at room temperature. This wet gel can be dried to form a silica aerogel comprising the hollow particles, and this silica gel can be pulverized to form a silica aerogel powder comprising the hollow particles.

The content of the hollow particles in the aerogel powder is preferably 0.01 % by mass to 30 % by mass, more preferably 0.1 % by mass to 15 % by mass, most preferably 1 % by mass to 10 % by mass.

Preferably, in the present invention, the content of the ultrafine silica powder in the raw material composition is 40 % by mass to 95 % by mass. This makes it possible to further reduce the occurrence of a defect in the molded body.

As the ultrafine silica powder, it is possible to use an ultrafine silica powder obtained by a precipitation method, an ultrafine silica powder obtained by a gel method, etc., in addition to fumed silica.

As used in this specification, the term "ultrafine powder" means: a powder having a primary particle size of 5 nm to 200 nm, when the powder is composed of relatively spherical primary particles obtained by a sedimentation method, etc.; or a powder having a specific surface area of 50 m²/g to 500 m²/g, when the powder is composed of fumed silica (fumed silica particles) or the like, and its complicated particle shape causes difficulty in identifying the particle size thereof.

In a case where fumed silica is comprised in the ultrafine silica powder, the specific surface area of the fumed silica is preferably 100 m²/g to 400 m²/g. This makes it possible to further reduce the occurrence of a defect in the molded body. That is, fumed silica has a complicated particle shape as mentioned above, wherein a smaller specific surface area means that the fumed silica has a shorter length, and entanglement of raw material particles becomes weaker, so that the strength of the molded body is reduced. On the other hand, a larger specific surface area means that the fumed silica has a longer length, and entanglement of raw material particles becomes stronger, so that the strength of the molded body is increased. Taking into account these, the specific surface area of the fumed silica is preferably 100 m²/g to 400 m²/g.

Preferably, in the present invention, the raw material composition contains a fiber in an amount of 0.5 % by mass to 10 % by mass. This makes it possible to improve the compressive strength of the molded body, and reduce the occurrence of a defect in the molded body.

The fiber may be an inorganic fiber or may be an organic fiber. Examples of the inorganic fiber include silica fiber, glass fiber, and alumina fiber, and examples of the organic fiber include: a natural fiber such as cotton, hemp, or silk; and a synthetic fiber such as aramid, polyamide, polyester, polyethylene, acrylic, rayon, or cellulose nanofiber.

In the present invention, in addition to the aforementioned aerogel powder, ultrafine silica powder and fiber, the raw material composition may appropriately comprise powders of one or more selected from the group consisting of fumed alumina, silicon carbide, titanium dioxide, iron oxide, zirconium oxide, zirconium silicate, zinc oxide, mica, and metallic aluminum

Then, after subjecting such a raw material composition to mixing, the resulting mixture is subjected to press molding to obtain an aerogel composite molded body according to the present invention.

As a press-molding method, it is possible to use uniaxial press molding, biaxial press molding, and cold isostatic press (CIP) molding. Conditions for the press molding may be appropriately determined depending on desired properties of the aerogel composite molded body.

Before the press molding, a binder may or may not be added to the raw material composition.

The aerogel composite molded body of the present invention can be suitably used as a thermal insulator, but it can also be used as an acoustic insulator. Specifically, the aerogel composite molded body is porous, and when a sound wave hits it and air in the molded body vibrates, resistance acts to the air, and sound energy is converted to thermal energy by friction, to produce a sound absorption effect. Thus, the aerogel composite molded body can also be used as an acoustic insulator.

### EXAMPLES

Table 1 shows respective raw material compositions and evaluation results of aerogel composite molded bodies of Inventive Examples, and Table 2 shows respective raw material compositions and evaluation results of Comparative Examples.

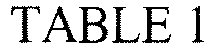

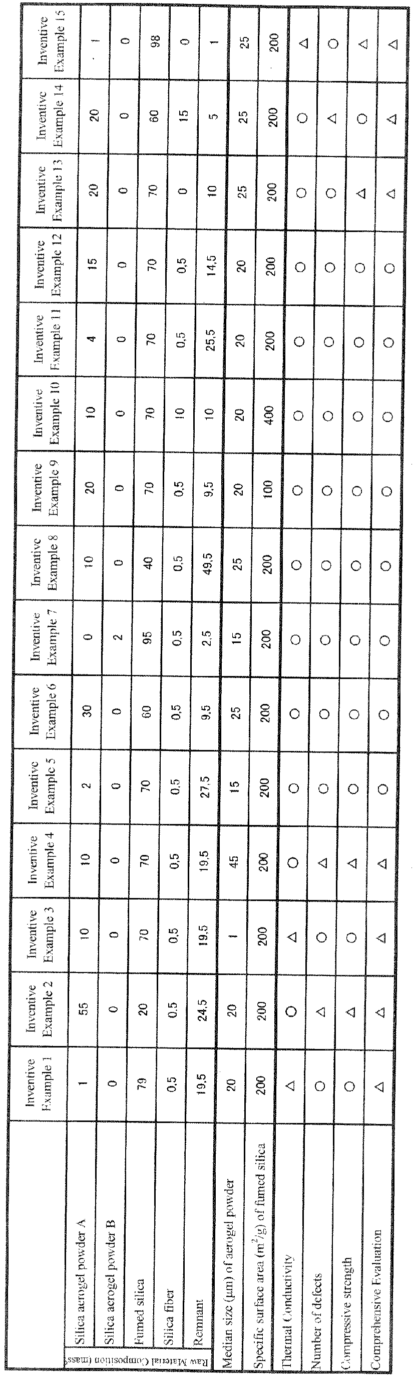

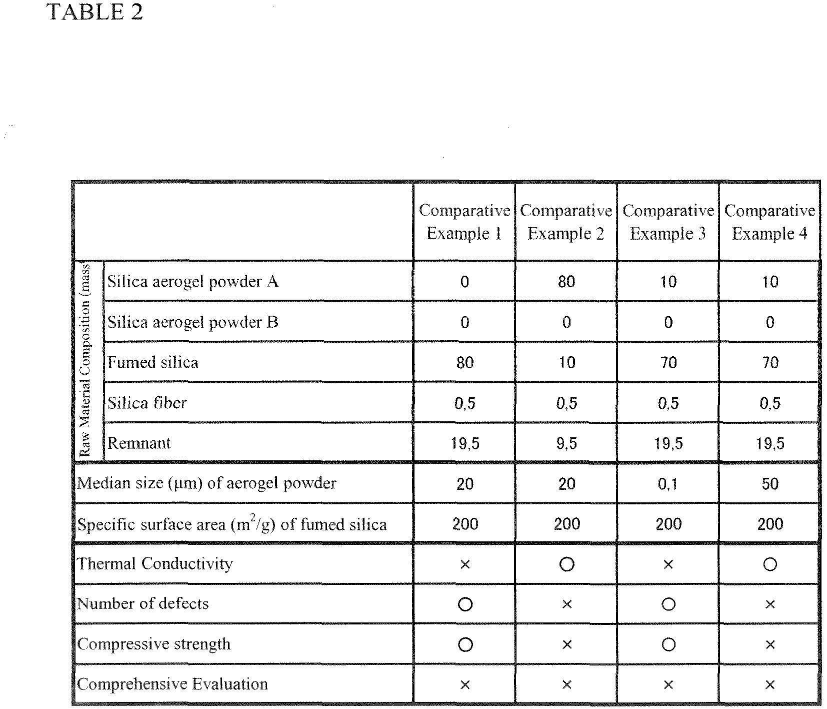

In the raw material compositions shown in Tables 1 and 2, "Silica aerogel powder A" means a silica aerogel powder obtained by subjecting an aerogel raw material (silica gel) to a heretofore-known drying method, i.e., normal pressure drying, to prepare a silica aerogel, and appropriately pulverizing the silicon aerogel, and "Silica aerogel powder B" means a silica aerogel powder comprising hollow particles prepared by a supercritical drying method. Further, "Remnant" means fumed alumina and a silicon carbide powder.

After subjecting a raw material composition in each Example to mixing, the resulting mixture was uniaxially press-molded at a molding pressure of 10 kg/cm² to obtain a molded body having a size of 50 mm width × 50 mm length × 20 mm thickness. Then, the molded body in each Example was evaluated in terms of thermal conductivity, the number of defects (cracks), and compressive strength, and then comprehensively evaluated based on the results of the above evaluations.

An evaluation method and an evaluation criterion for each evaluation item are as follows.

### < Thermal Conductivity >

The molded body was subjected to a measurement under room temperature in accordance with JIS A1412-1 "Test method for thermal resistance and related properties of thermal insulations- Part 1: Guarded hot plate (GDP) apparatus", and a relative value was determined based on an assumption that the thermal conductivity (W/mk) of Comparative Example 1 as a conventional commonly-used silica thermal insulator is 100. A smaller relative value means a lower thermal conductivity (higher thermal insulation property). In the evaluation of the thermal conductivity, a sample having a relative value of less than 80, a sample having a relative value of 80 to less than 95, and a sample having a relative value of 95 or more, were evaluated, respectively, as ∘ (Good), Δ (Allowable), and × (NG).

### < Number of Defects >

The number of linear defects visually recognizable on four side faces of the molded body having a size of 50 mm width × 50 mm length × 20 mm thickness was counted. With regard to the total number of linear defects, a sample in which the number was 0 to 10, a sample in which the number was 11-30, and a sample in which the number was 31 or more, were evaluated, respectively, as ∘ (Good), Δ (Allowable), and × (NG). Here, each sample evaluated as ∘ or Δ in terms of the number of defects is at a level where it can be used as a thermal insulator or the like.

### < Compressive Strength >

A test piece having a size of 40 mm width × 40 mm length × 20 mm thickness was cut from the molded body having a size of 50 mm width × 50 mm length × 20 mm thickness, and subjected to a measurement under the condition that the degree of compressive stress was 0.05 to 0.2 MPa/s, in accordance with JIS R2206-2 "Testing methods for cold compressive strength of refractory bricks-Part 2: Test with packing", and a relative value was determined based on an assumption that the compressive strength (MPa) of Comparative Example 1 as a conventional commonly-used silica thermal insulator is 100. A larger relative value means that the molded body has a higher compressive strength, and a smaller number of defects, i.e., the molded body is better. In the evaluation of the compressive strength, a sample having a relative value of 80 or more, a sample having a relative value of 50 to less than 80, and a sample having a relative value of less than 50, were evaluated, respectively, as ∘ (Good), Δ (Allowable), and × (NG).

### < Comprehensive Evaluation >

A sample in which all of the evaluation items were evaluated as ∘ (Good), a sample in which none of the evaluation items were evaluated as ×, but at least one of the evaluation items was evaluated as Δ, and a sample in which at least one of the evaluation items was evaluated as ×, were evaluated, respectively, as ∘ (Good), Δ (Allowable), and × (NG).

Inventive Examples 1 to 15 shown in Table 1 are aerogel composite molded bodies each falling within the scope of the present invention. With regard to each of Inventive Example 1 to 15, the comprehensive evaluation was ∘ (Good) or Δ (Allowable), and good individual evaluations in terms of all the thermal conductivity, the number of defects and the compressive strength could be obtained. Among them, Inventive Examples 5 to 12 are aerogel composite molded bodies in each of which each of the content and median size of the aerogel powder, the content and specific surface area of the ultrafine silica powder (fumed silica), and the content of the fiber falls within a corresponding one of the aforementioned preferable ranges. In each of Inventive Examples 5 to 12, the comprehensive evaluation was ∘ (Good), and as compared to other Inventive Examples, better individual evaluations could be obtained. In Inventive Example 7 using the "silica aerogel powder B" which is a silica aerogel powder comprising the hollow particles, the thermal conductivity is significantly lowered.

Comparative Example 1 shown in Table 2 is a conventional commonly-used silica insulator containing no aerogel powder. In Comparative Example 1, although the number of defects in the molded body was small, and the compressive strength was sufficient, the thermal conductivity was evaluated as × (NG).

Comparative Example 2 is an aerogel composite molded body in which the content of the aerogel powder is excessively large. In Comparative Example 2, the number of defects in the molded body and the compressive strength were evaluated as × (NG).

Comparative Example 3 is an aerogel composite molded body in which the median size of the aerogel powder is excessively small. In Comparative Example 3, the thermal conductivity was evaluated as × (NG).

Comparative Example 4 is an aerogel composite molded body in which the median size of the aerogel powder is excessively large. In Comparative Example 4, the number of defects in the molded body and the compressive strength were evaluated as × (NG).

## Claims

1. An aerogel composite molded body obtained by press-molding a raw material composition comprising an aerogel powder and an ultrafine silica powder excluding the aerogel powder, wherein:
the aerogel powder has a median size of 1 µm to 45 µm; and
the raw material composition contains the aerogel powder in an amount of 1 % by mass to 55 % by mass.

2. The aerogel composite molded body as claimed in claim 1, wherein the raw material composition contains the ultrafine silica powder in an amount of 40 % by mass to 95 % by mass.

3. The aerogel composite molded body as claimed in claim 1 or 2, wherein the raw material composition contains a fiber in an amount of 0.5 % by mass to 10 % by mass.

4. The aerogel composite molded body as claimed in any one of claims 1 to 3, wherein the aerogel powder comprises hollow particles.

5. The aerogel composite molded body as claimed in any one of claims 1 to 4, wherein the median size of the aerogel powder is 15 µm to 25 µm.

6. The aerogel composite molded body as claimed in any one of claims 1 to 5, wherein the content of the aerogel powder in the raw material composition is 2 % by mass to 30 % by mass.

7. The aerogel composite molded body as claimed in any one of claims 1 to 5, wherein the content of the aerogel powder in the raw material composition is 4 % by mass to 15 % by mass.

8. The aerogel composite molded body as claimed in any one of claims 1 to 7, wherein the ultrafine silica powder comprises fumed silica, wherein the fumed silica has a specific surface area of 100 m²/g to 400 m²/g.
